# EUROPÄISCHE PATENTANMELDUNG

(11) **EP 1 024 384 A2**
(43) Veröffentlichungstag der Anmeldung: **02.08.2000**
(21) Anmeldenummer: 99403156.5
(22) Anmeldetag: 16.12.1999
(51) Int. Cl.: G02B 6/44

(54) **Optisches Kabel für die Verlegung in Abwasserkanälen**

(30) Priorität: 13.01.1999 DE 19900944
(71) Anmelder: ALCATEL, 75008 Paris (FR)
(72) Erfinder: Weiss, Alexander Dr.rer.nat., 41066 Mönchengladbach (DE); Garcia, Marta, 39004 Santander (Cantabria) (ES); Richter, Stefan, Hickory NC 28061 (US)
(74) Vertreter: Rausch, Gabriele, Dr.

(57) **Zusammenfassung**

Ein optisches Kabel für die Verlegung in Abwasserkanälen mit einer Kabelseele und einem die Kabelseele umgebenden metallischen Mantel (5), bei welchem die Kabelseele aus mehreren Aufbauelementen (3) besteht, die eine Hülle (2) aufweisen, in welcher mehrere Lichtwellenleiter (1) untergebracht sind, ist durch folgende Maßnahmen gekennzeichnet:
A. jedes Aufbauelement (3) besteht aus einem Bündel aus einer Vielzahl von parallel zueinander verlaufenden unverseilten oder mit großer Schlaglänge verseilten Lichtwellenleitern (1)
B. jedes Bündel ist von einer das Bündel eng umfassenden Hülle (2) umgeben
C. mehrere solcher Aufbauelemente (3) sind zu der Kabelseele verseilt, wobei die Kabelseele ausschließlich aus solchen Bündeln aufgebaut ist.

## Beschreibung

Die Erfindung betrifft ein optisches Kabel nach dem Oberbegriff des Anspruchs 1.

Aus dem Alcatel-Prospekt "Fast - das LWL Kabelsystem für Kabelanlagen in städtischen Abwasserkanälen" ist ein optisches Kabel bekannt, welches aus einem Zentralelement besteht, um welches sechs Bündeladern herumgeseilt sind. Ein gewellter metallischer Außenmantel umgibt die Kabelseele. Auf dem Außenmantel kann noch ein Kunststoffmantel angeordnet sein. Jede Bündelader hat 24 Fasern, so daß sich eine Gesamtfaserzahl von 144 ergibt. Der Außendurchmesser dieses bekannten Kabels beträgt 15 mm. Die Lichtwellenleiter liegen in den Bündeladern mit einer Überlänge vor.

Das bekannte Kabel deckt alle Anwendungen in den Abwasserkanälen ab. Es werden nur Materialien eingesetzt, die widerstandsfähig für die besonderen Anforderungen in Abwasserkanälen sind. Spezielle Mantelmischungen bieten Schutz gegen aggressive Chemikalien. Der Metallmantel stellt einen zweiten Schutzschild dar und bietet höchsten Schutz gegen Nagetiere. Kunststoffaußenmantel und Metallmantel schützen die empfindliche Lichtwellenleiterkabelseele wie ein Panzer hermetisch vor der aggressiven Umwelt.

Nachteilig ist bei diesem Kabel jedoch, bezogen auf die Anzahl der untergebrachten Fasern, der große Außendurchmesser. Ein weiterer Nachteil ist die nicht befriedigende Modularität, d. h. der Zugriff auf die einzelnen Fasern ist verbesserungsfähig.

Der vorliegenden Erfindung liegt von daher die Aufgabe zugrunde, das bekannte optische Kabel dahingehend zu verbessern, daß bei gleichem Außendurchmesser des Kabels eine höhere Anzahl an Fasern in dem Kabel befindlich sind und daß die Aufteilung der Fasern in dem Kabel optimiert ist, d. h. eine hohe Aderzahl im Kabel untergebracht ist.

Diese Aufgabe wird durch die im Kennzeichen des Anspruchs 1 erfaßten Merkmale gelöst.

Weitere vorteilhafte Ausgestaltungen der Erfindung sind in den Unteransprüchen erfaßt.

Während bei dem bekannten Kabel der Außendurchmesser der Kabelseele in etwa 7,8 mm bei einer Faserzahl von 144 aufweist, beträgt der Außendurchmesser der Kabelseele des erfindungsgemäßen Kabels weniger als 6,0 mm bei einer gleichen Faserzahl.

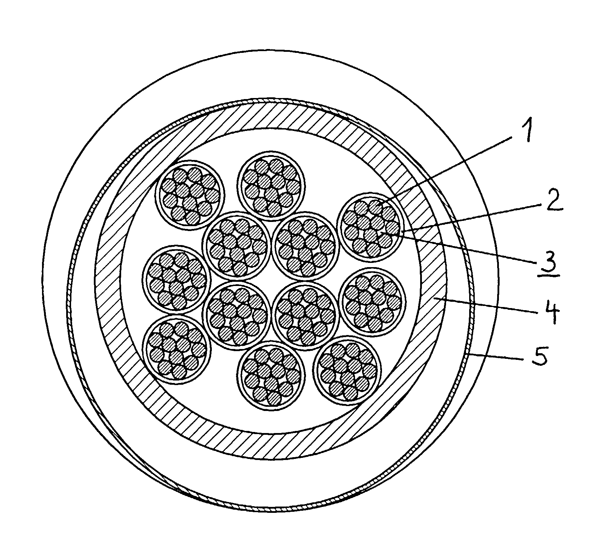

Die Erfindung ist anhand des in der Figur schematisch dargestellten Ausführungsbeispiels näher erläutert.

Die Kabelseele besteht aus einem Innen- oder Zwischenmantel 4, in dem sich eine Vielzahl von Aufbauelementen, im Folgenden als Faserbündel bezeichnet, befindet. Jedes Faserbündel 3 besteht aus mehreren Lichtwellenleitern 1, die parallel zueinander verlaufen bzw. mit großer Schlaglänge miteinander verseilt sind und einer Hülle 2, welche den Lichtwellenleiter 1 eng umschließt. Die Kabelseele ist von einem Außenmantel 5 umgeben. Der Außenmantel ist ein längsnahtgeschweißtes und gewelltes Metallrohr aus rostfreiem Stahl.

Die Faserbündel 3 sind miteinander mit wechselnder Schlagrichtung verseilt.

Die Hülle 2 dient lediglich dazu, die Lichtwellenleiter 1 zusammenzuhalten. Sie sollten aus einem weichen Kunststoff bestehen, damit die Hülle 2 leicht entfernbar ist. Geeignete Werkstoffe sind Weichpolyethylen, Weichpolyvinylchlorid etc.. Die Wanddicke der Hülle 2 beträgt in etwa 0,2 mm, so daß sich bei 12 Lichtwellenleitern 1, die einen Durchmesser von 0,25 mm aufweisen, ein Außendurchmesser der Faserbündel 3 von ca. 1,5 mm ergibt.

In der Figur ist eine Anordnung der Faserbündel 3 dargestellt, bei welcher vier Faserbündel 3 den Kern bilden, um den weitere acht Faserbündel 3 herumgeseilt sind. Diese Anordnung hat den Vorteil, daß sich die Faserbündel 3 bei einer Biegung des Kabels innerhalb des Mantels 3 verschieben können. Eine geometrisch günstigere Anordnung der Faserbündel 3 ergibt sich, wenn um einen Kern aus drei Faserbündeln neun Faserbündel 3 herumgeseilt werden.

Die Hüllen 2 der Faserbündel 3 können zum Zwecke der besseren Unterscheidung unterschiedlich eingefärbt sein. Die Faserbündel 3 können auch mit einem Petroleumjelly gefüllt sein, um eine Längswanderung von eingedrungenem Wasser zu verhindern.

Der Innen- bzw. Zwischenmantel 4 besteht aus einem thermoplastischen Kunststoff, z. B. aus Polyethylen. Auch die Zwischenräume zwischen den Faserbündeln 3 und dem Innenmantel 3 bzw. bei einem Kabel ohne Innenmantel zwischen Faserbündel 3 und dem Metallmantel 5 können mit einem eine Längswasserwanderung verhindernden Material ausgefüllt sein. Beispiele hierfür sind Petroleumjelly, mit Quellmittel versehene Garne bzw. Rovings.

Der Metallmantel 5 kann noch von einem nicht dargestellten Mantel aus abriebfestem Kunststoff auf der Basis von vernetztem Polyethylen, Polyurethan etc. umgeben sein.

Das Kabel gemäß der Lehre der Erfindung ist insbesondere für die Verlegung in Versorgungsleitungen wie Gas-, Wasser-, Abwasserleitungen bzw. unter ähnlich harten Bedingungen geeignet. Es zeichnet sich durch einen geringeren Außendurchmesser, eine große Faserzahl und eine hohe mechanische Festigkeit aus.

## Patentansprüche

1. Optisches Kabel für die Verlegung in Abwasserkanälen mit einer Kabelseele und einem die Kabelseele umgebenden metallischen Mantel (5), bei welchem die Kabelseele aus mehreren Aufbauelementen (3) besteht, die eine Hülle (2) aufweisen, in welcher mehrere Lichtwellenleiter (1) untergebracht sind,
gekennzeichnet durch folgende Maßnahmen
a) jedes Aufbauelement (3) besteht aus einem Bündel aus einer Vielzahl von parallel zueinander verlaufenden unverseilten oder mit großer Schlaglänge verseilten Lichtwellenleitern (1)
b) jedes Bündel ist von einer das Bündel eng umfassenden Hülle (2) umgeben
c) mehrere solcher Aufbauelemente (3) sind zu der Kabelseele verseilt, wobei die Kabelseele ausschließlich aus solchen Bündeln aufgebaut ist.

2. Optisches Kabel nach Anspruch 1, dadurch gekennzeichnet, daß die Aufbauelemente (3) mit wechselnder Schlagrichtung verseilt sind.

3. Optisches Kabel nach Anspruch 1 oder 2, dadurch gekennzeichnet, daß insgesamt zwölf Aufbauelemente (3) innerhalb des metallischen Mantels (5) untergebracht sind.

4. Optisches Kabel nach Anspruch 3, dadurch gekennzeichnet, daß vier miteinander verseilte Aufbauelemente (3) das Zentrum der Seele bilden, welches von acht Aufbauelementen (3) umseilt ist.

5. Optisches Kabel nach einem der Ansprüche 1 bis 4, dadurch gekennzeichnet, daß der metallische Mantel (5) aus einem längsnahtgeschweißten und gewellten Rohr aus rostfreiem Stahl besteht.

6. Optisches Kabel nach einem der Ansprüche 1 bis 5, dadurch gekennzeichnet, daß die Kabelseele durch ein wendelförmig aufgebrachtes Band zusammengehalten ist.

7. Optisches Kabel nach einem der Ansprüche 1 bis 5, dadurch gekennzeichnet, daß zwischen der Kabelseele und dem Außenmantel (5) ein Innenmantel (4) aus einem thermoplastischen Material angeordnet ist.

8. Optisches Kabel nach einem der Ansprüche 1 bis 7, dadurch gekennzeichnet, daß die Aufbauelemente (3) mit einer eine Längswasserwanderung verhindernden Masse gefüllt sind.

9. Optisches Kabel nach einem der Ansprüche 1 bis 8, dadurch gekennzeichnet, daß die die Bündel umgebende Hülle (2) aus einem weichen, leicht entfernbaren Kunststoff besteht.
